# FASCICULE DE BREVET EUROPEEN

(11) **EP 1 216 480 B1**
(45) Date de publication et mention de la délivrance du brevet: **16.11.2005**
(21) Numéro de dépôt: 00966213.1
(22) Date de dépôt: 28.09.2000
(51) Int. Cl.: G21C 3/07, C22F 1/18, C22C 16/00

(54) **ALLIAGE A BASE DE ZIRCONIUM ET PROCEDE DE FABRICATION DE COMPOSANT POUR ASSEMBLAGE DE COMBUSTIBLE NUCLEAIRE EN UN TEL ALLIAGE**
ZIRKONIUMLEGIERUNG UND VERFAHREN ZUR HERSTELLUNG EINES BAUTEILES FÜR KERNREAKTORBRENNSTABBÜNDEL AUS DIESER LEGIERUNG
ZIRCONIUM-BASED ALLOY AND METHOD FOR MAKING A COMPONENT FOR A NUCLEAR FUEL ASSEMBLY WITH SAME

(30) Priorité: 30.09.1999 FR 9912248
(43) Date de publication de la demande: 26.06.2002
(73) Titulaire: Framatome ANP, 92400 Courbevoie (FR); Compagnie Européenne du Zirconium CEZUS, 92400 Courbevoie (FR)
(72) Inventeur: CHARQUET, Daniel, CEZUS, F-73400 Ugine Cedex (FR); MARDON, Jean-Paul, F-69300 Caluire (FR); SENEVAT, Jean, F-73400 Annecy (FR)
(74) Mandataire: Jacobson, Claude
(86) Numéro de dépôt international: PCT/FR2000/002680
(87) Numéro de publication internationale: WO 2001/024194

(56) Documents cités:
- WO-A-93/16205
- WO-A-97/05628
- WO-A-99/50854
- FR-A- 2 769 637

## Description

La présente invention concerne l'application d'alliages à base de zirconium pour des composants pour assemblage de combustible nucléaire utilisables dans les réacteurs nucléaires à eau légère tels que les gaines de crayon de combustible nucléaire ou les tubes guides d'assemblage, ou même des produits plats tels que des plaquettes de grille.

Elle trouve une application particulièrement importante, bien que non exclusive, dans le domaine de la fabrication de tubes de gainage pour les crayons de combustible destinés à ceux des réacteurs à eau sous pression dans lesquels les risques de corrosion sont particulièrement élevés, ainsi que dans celui des feuillards utilisés pour les composants de structure des assemblages de combustible de tels réacteurs. Elle propose également un procédé de fabrication de tels composants.

La demande de brevet PCT WO 99/50 854 propose un alliage à base de zirconium contenant également, en poids, en dehors des impuretés inévitables, 0,03 à 0,25% au total de fer d'une part, de l'un au moins des éléments du groupe constitué du chrome et du vanadium d'autre part, ayant 0,8 à 1,3% de niobium, moins de 2000 ppm d'étain, 500 à 2000 ppm d'oxygène, moins de 100 ppm de carbone, de 5 à 35 ppm de soufre et moins de 50 pm de silicium, le rapport entre la teneur en fer d'une part, la teneur en chrome ou en vanadium d'autre part, étant comprise entre 0,5 et 30.

L'invention est fondée sur des constatations faites par les inventeurs au cours d'une étude systématique des phases intermétalliques et des formes cristallographiques de ces phases qui apparaissent lorsque l'on fait varier les teneurs relatives en fer et en niobium alors que les teneurs en étain, soufre et oxygène sont décrites dans la demande mentionnée plus haut. Elle est également fondée sur la constatation, faite expérimentalement, que la nature et la forme cristallographique des phases intermétalliques contenant du zirconium, du fer et du niobium, ont une influence importante sur la résistance à la corrosion dans divers environnements.

En particulier il a été constaté que la présence de composés Zr (Nb, Fe)₂ à structure cristalline à maille hexagonale et de la phase βNb améliore notablement la corrosion dans le milieu aqueux qui existe dans la plupart des réacteurs à eau sous pression.

La présente invention vise notamment à fournir des composants dont la composition peut être adaptée de façon optimale aux conditions d'utilisation prévues et dont la composition n'est pas de nature à gêner de façon excessive les étapes de fabrication.

Dans ce but, l'invention propose une application telle que définie à la revendication 1.

Le choix du rapport R résulte de la constatation que la phase à maille hexagonale n'apparaît que lorsque la relation entre la teneur en Fe (plus en Cr et V s'ils sont présents) et la teneur en Nb est telle que R dépasse un seuil qui dépend légèrement des teneurs en autres éléments et de la température, mais reste toujours supérieur à 2,5.

La teneur en oxygène est avantageusement contrôlée de façon à être comprise entre 1000 et 1600 ppm.

Le composant défini dans l'application selon l'invention peut être obtenu par un procédé de fabrication d'un tube suivant lequel :
- on constitue une barre en un alliage à base de zirconium contenant également, en poids, en dehors des impuretés inévitables, 0,02 à 1 % de fer, 0, 8 % à 2,3 % de niobium, moins de 2000 ppm d'étain, moins de 2000 p d'oxygène, moins de 100 ppm de carbone, de 5 à 35 ppm de soufre et de 0,01 % à 0,25 % au total de chrome et/ou de vanadium, le rapport entre la teneur en niobium moins 0,5 % et la teneur en fer, complétée éventuellement par la teneur en chrome et/ou en vanadium étant supérieur à 2,5 ;
- on trempe à l'eau la barre après chauffage entre 1000°C et 1200°C ;
- on file une ébauche après chauffage à une température entre 600°C et 800°C ;
- on lamine à froid, en au moins deux passes, ladite ébauche pour obtenir un tube, avec des traitements thermiques intermédiaires entre 560°C et 620°C ; et
- on effectue un traitement thermique final entre 560°C et 620°C, l'ensemble des traitements thermiques étant effectué en atmosphère inerte ou sous vide.

Le traitement thermique final laisse le tube à l'état recristallisé, favorable à la résistance au fluage, sans modification de la nature des phases.

Avec le procédé décrit ci-dessus coexistent les précipités de phase βNb et le composé intermétallique de maille hexagonale de type Zr(Nb,Fe,Cr,V)₂.

L'alliage peut également être utilisé pour constituer des éléments plats. Ils seront également utilisés à l'état recristallisé et peuvent être fabriqués par la séquence suivante : on constitue une ébauche en un alliage à base de zirconium contenant également, en poids, en plus des impuretés inévitables, 0,02 à 1 % de fer, 0,8 % à 2,3 % de niobium, moins de 2000 ppm d'étain, moins de 2000 ppm d'oxygène, moins de 100 ppm de carbone, de 5 à 35 ppm de soufre et de 0,01% à 0,25 % au total de chrome et/ou de vanadium, le rapport entre la teneur en niobium moins 0,5 % et la teneur en fer, complétée éventuellement par la teneur en chrome et/ou en vanadium étant supérieur à 2,5,
on lamine à froid, en au moins trois passes, l'ébauche avec des traitements thermiques intermédiaires et un traitement thermique final,
l'un de ces traitements thermiques intermédiaires ou un traitement thermique préalable avant la première passe de laminage à froid étant effectué pendant une durée longue d'au moins 2 heures à une température inférieure à 600°C, et
tous les traitements thermiques éventuels qui suivent le traitement long, et particulièrement le traitement final de recristallisation, étant effectués à une température inférieure à 620°C.

L'existence des composés intermétalliques due à la présence de fer en quantité suffisante, particulièrement celle de Zr(Nb, Fe)₂, diminue la quantité des précipités de niobium en phase β, mais aussi la teneur en niobium de la solution solide et donne une bonne résistance à la corrosion uniforme à une température de 400°C, représentative de celle qui règne dans des réacteurs. Pour un rapport Fe/Nb inférieur à 0,25, la phase βNb reste peu présente.

La présence de chrome et/ou de vanadium en remplacement très partiel du fer et/ou du niobium dans les précipités inter-métalliques de type Zr(Nb, Fe, Cr, V)₂ n'a pas d'influence marquée sur la corrosion à 400°C. La tenue améliorée à la corrosion à 400°C reste acquise surtout si la somme Fe+Cr est d'au moins 0,03 %.

En résumé, un alliage du genre ci-dessus, utilisé à l'état recristallisé pour augmenter sa tenue au fluage biaxé des tubes et à l'aptitude à l'emboutissage des tôles présente des caractéristiques ajustables par réglage du rapport fer/niobium, mais toujours favorables ; il a en particulier une résistance élevée à la corrosion en milieu aqueux à haute température, d'autant plus élevée que l'on adopte une teneur en fer élevée, autorisée par une teneur en Nb élevée.

Il a de plus une résistance élevée au fluage grâce à la présence d'étain qui reste à une très faible teneur et, grâce au dopage par l'oxygène à une teneur inférieure à 2000 ppm, qui n'a alors pas d'effet néfaste sur la résistance à la corrosion.

Dans les réacteurs actuels, les plages ci-après sont particulièrement intéressantes comme alliage à base de zirconium contenant également, en poids, en dehors des impuretés inévitables : 1 à 1,8 % en poids de niobium, 0,1 à 0,3 % en poids de fer, 0, 15 à 0,20 % en poids d'étain, 0,01 à 0,1 % en poids de chrome et/ou de vanadium, 1000 à 1600 ppm d'oxygène, moins de 100 ppm de carbone et 5 à 35 ppm de soufre.

Les caractéristiques ci-dessus ainsi que d'autres apparaîtront mieux à la lecture de la description qui suit, de modes particuliers de réalisation, donnés à titre d'exemple non limitatif. La description se réfère aux dessins qui l'accompagnent, dans lesquels :
- la figure 1 est un diagramme ternaire montrant les composés intermétalliques et microstructures qui apparaissent pour divers domaines de composition, pour une teneur de 0,2 % en étain, à une température comprise entre 560°C et 620°C;

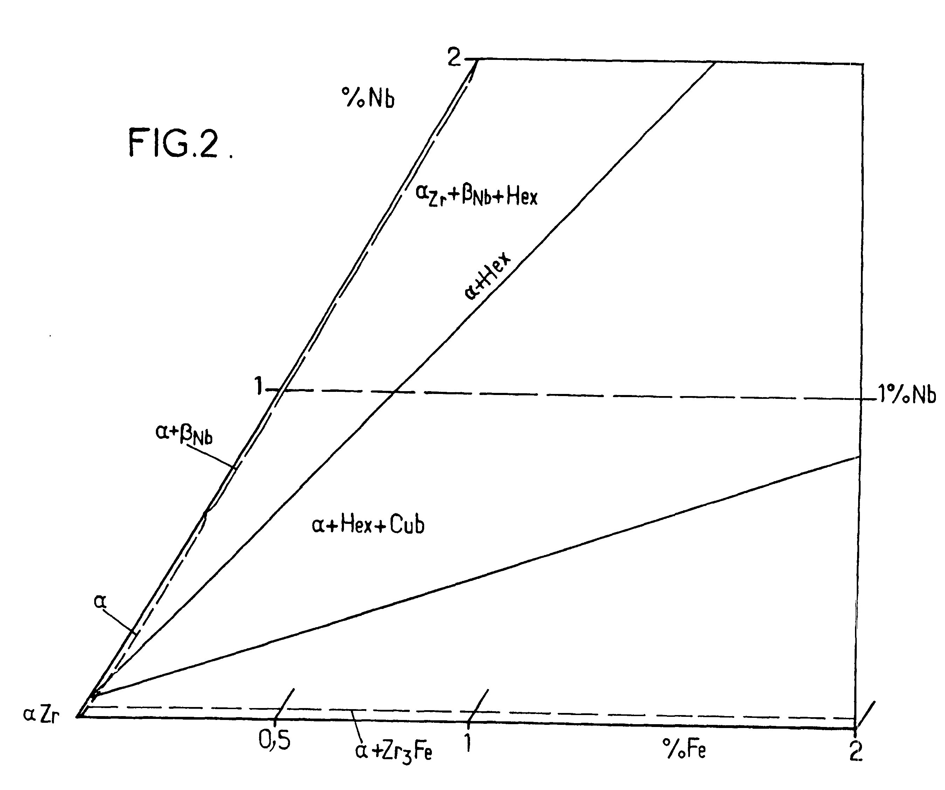

- la figure 2 montre à grande échelle une fraction du diagramme ;

Les teneurs en C, Si, O₂ étaient sensiblement identiques pour tous les échantillons et étaient inférieures aux valeurs maximales données plus haut. La teneur en étain était de 0,2 % et la teneur en soufre de 10 ppm.

Les échantillons ont été fabriqués par des opérations thermo-métallurgiques à une température ne dépassant pas 620°C, tout traitement dépassant cette valeur au-delà du filage réduisant la résistance à la corrosion à chaud.

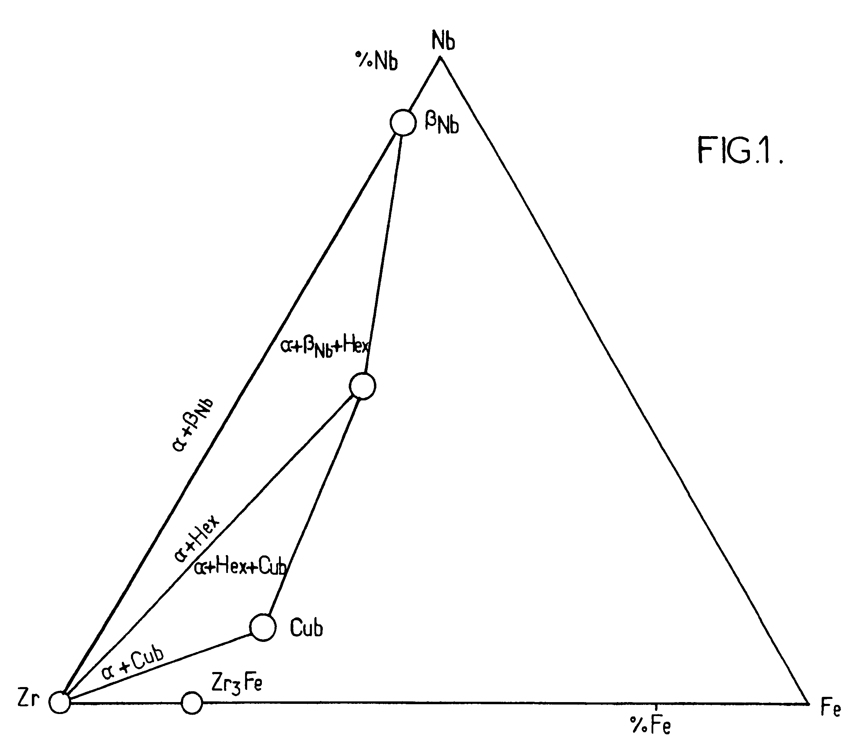

Le diagramme ternaire de la figure 1 fait apparaître, pour des rapports Fe/Nb inférieurs à 0,3 environ, l'existence d'une zone dans laquelle coexistent la phase αZr (à l'exclusion de la phase βZr qui est très défavorable du point de vue de la résistance à la corrosion), les précipités de phase βNb et la phase intermétallique Zr(Nb,Fe)₂ qui a une structure hexagonale.

Les composés, correspondant à un rapport (Nb-0,5 %)/Fe+Cr+v supérieur à un seuil toujours supérieur à 2,5, seront utilisés lorsque le phénomène à combattre en prépondérance est la corrosion uniforme dans l'eau à haute température ayant une teneur en lithium faible.

Pour un rapport Fe/Nb élevé, et cela jusqu'à une teneur en niobium de l'ordre de 50 %, supérieure de plus d'un ordre de grandeur aux teneurs utilisées, apparaît également le composé (Zr,Nb)₄Fe₂, qui est cubique à faces centrées.

Lorsque les conditions d'utilisation rendent souhaitable d'avoir des composés intermétalliques qui sont uniquement ou de façon prépondérante à structure hexagonale, on constate que le résultat est atteint en adoptant un rapport Fe/Nb inférieur à 0,3, en respectant également la relation (Nb-0,5 %) / Fe+Cr+V >2,5.

Une étude précise du diagramme pour les teneurs faibles en Fe et Nb montre que la teneur de Nb en solution solide évolue avec la teneur en Fe, à Nb constant.

Dès que la teneur en Fe dépasse 60 - 70 ppm pour l'alliage selon la présente invention, on voit apparaître la forme Zr(Nb,Fe)₂ hexagonale, qui se substitue à la phase βNb pour un rapport en poids Nb/Fe sensiblement égal à 2,3.

Apparaît ensuite le composé (Zr,Nb)₄Fe₂ cubique à faces centrées, correspondant au rapport Nb/Fe sensiblement égal à 0,6.

Cette phase cubique (Zr,Nb)₄Fe₂ commence à apparaître pour :
1 % Nb entre 0,29 et 0,44 % Fe
1,5 % Nb entre 0,49 et 0,66 % Fe
2 % Nb au-delà de 0,78 % Fe

Le diagramme montre qu'en augmentant simultanément la teneur en Nb et en Fe, on obtient une densité d'intermétalliques plus élevée, ce qui est favorable à la corrosion en milieu aqueux.

Le tableau suivant montre l'influence des teneurs croissantes en fer, qui ne dégradent pas la corrosion uniforme pour un alliage de 1 % en niobium, les autres éléments ayant des teneurs telles que décrites plus haut.

| Fe % en poids | Gain en Poids en mg/dm² 415°C vapeur, 311 jours, 105 bars |
|---|---|
| 0,03 | 490 |
| 0,15 | 456 |
| 0,29 | 455 |

## Revendications

1. Application d'un alliage à base de zirconium contenant également, en poids, en plus des impuretés inévitables, 0,02 à 1% de fer 0,8% à 2,3% de niobium, moins de 2000 ppm d'étain, moins de 2000 ppm d'oxygène, moins de 100 ppm de carbone, de 5 à 35 ppm de soufre et de 0,01 % à 0,25 % au total de chrome et/ou de vanadium, le rapport entre la teneur en niobium moins 0,5 % et la teneur en fer, complétée éventuellement par la teneur en chrome et/ou en vanadium, étant supérieur à 2,5 à la constitution de composants de réacteur nucléaire à eau sous pression contenant initialement moins de 3,5 ppm de application d'un lithium.

2. Application d'un alliage suivant la revendication 1, **caractérisée en ce que** l'alliage contient à 1000-1600 ppm d'oxygène.

3. Application d'un alliage selon la revendication 1, **caractérisée en ce que** l'alliage contient : 1 à 1,8 % en poids de niobium, 0,1 à 0,3 % en poids de fer, 0,15 à 0,20 % en poids d'étain, 0,01 à 0,1 % en poids de chrome et/ou de vanadium, 1000 à 1600 ppm d'oxygène, moins de 100 ppm de carbone et entre 5 à 35 ppm de soufre.

4. Application d'un alliage selon l'une des revendications 1 à 3, **caractérisée en ce que** le composant est un tube de gainage.

5. Application d'un alliage selon l'une des revendications 1 à 3, **caractérisée en ce que** le composant est un produit plat et **en ce que** l'alliage est à l'état recristallisé.

6. Application d'un alliage selon l'une des revendications 1 à 5, **caractérisée en ce que** le dit rapport est supérieur à 3.

7. Application d'un alliage selon des revendications 1 à 6, **caractérisé en ce que** la teneur en fer ne dépasse pas 0,35 %.

8. Application d'un alliage selon l'une des revendications 1 à 7, **caractérisé en ce que** des précipités de phase βNb et le composé intermétallique Zn(Nb, Fe, Cr, V)₂ coexistent au sein de l'alliage.

## Patentansprüche

1. Verwendung einer Legierung auf Basis von Zirkonium, die außerdem zusätzlich zu unvermeidlichen Verunreinigungen, bezogen auf das Gewicht, enthält
0,02 bis 1 % Eisen,
0,8 bis 2,3 % Niob,
weniger als 2000 ppm Zinn,
weniger als 2000 ppm Sauerstoff,
weniger als 100 ppm Kohlenstoff,
5 bis 35 ppm Schwefel und
insgesamt 0,01 bis 0,25 % Chrom und/oder Vanadin, wobei das Verhältnis zwischen dem Niobgehalt von weniger als 0,5 % und dem Eisengehalt, ergänzt gegebenenfalls durch den Gehalt an Chrom und/oder Vanadin, mehr als 2,5 beträgt,
zur Herstellung von Bauelementen eines Druckwasserreaktors, dessen Wasser anfänglich weniger als 3,5 ppm Lithium enthält.

2. Verwendung einer Legierung nach Anspruch 1, **dadurch gekennzeichnet, dass** die Legierung 1000 bis 1600 ppm Sauerstoff enthält.

3. Verwendung einer Legierung nach Anspruch 1, **dadurch gekennzeichnet, dass** die Legierung enthält
1 bis 1,8 Gew.% Niob,
0,1 bis 0,3 Gew.-% Eisen,
0,15 bis 0,20 Gew.-% Zinn,
0,01 bis 0,1 Gew.% Chrom und/oder Vanadin,
1000 bis 1600 ppm Sauerstoff,
weniger als 100 ppm Kohlenstoff und
5 bis 35 ppm Schwefel.

4. Verwendung einer Legierung nach einem der Ansprüche 1 bis 2, **dadurch gekennzeichnet, dass** es sich bei dem Bauelement um ein Umhüllungsrohr handelt und dass die Legierung im rekristallisierten Zustand vorliegt.

5. Verwendung einer Legierung nach einem der Ansprüche 1 bis 2, **dadurch gekennzeichnet, dass** es sich bei dem Bauelement um ein flaches (ebenes) Produkt handelt und dass die Legierung im rekristallisierten Zustand vorliegt.

6. Verwendung einer Legierung nach einem der Ansprüche 1 bis 5, **dadurch gekennzeichnet, dass** das genannte Verhältnis mehr als 3 beträgt.

7. Verwendung einer Legierung nach einem der Ansprüche 1 bis 6, **dadurch gekennzeichnet, dass** der Eisengehalt 0,35 Gew.-% nicht übersteigt.

8. Verwendung einer Legierung nach einem der Ansprüche 1 bis 7, **dadurch gekennzeichnet, dass** Präzipitate aus der β-Nb-Phase und eine intermetallische Verbindung Zr(Nb, Fe, Ca, V)₂ in einer Zone der Legierung nebeneinander vorliegen.

## Claims

1. Application of a zirconium-based alloy that also includes, by weight, in addition to inevitable impurities, 0.02 to 1% iron, 0.8% to 2.3% niobium, less than 2000 ppm tin, less than 2000 ppm oxygen, less than 100 ppm carbon, 5 to 35 ppm sulphur and 0.01% to 0.25% chromium and/or vanadium in total, the ratio of the niobium content less 0.5% to the iron content, to which is optionally added the chromium and/or vanadium content, being greater than 2.5, to the construction of pressurized-water nuclear reactor components initially containing less than 3.5 ppm lithium.

2. Application of an alloy according to Claim 1, **characterized in that** the alloy contains 1000 - 1600 ppm oxygen.

3. Application of an alloy according to Claim 1, **characterized in that** the alloy contains: 1 to 1.8% niobium by weight, 0.1 to 0.3% iron by weight, 0.15 to 0.20% tin by weight, 0.01 to 0.1% chromium and/or vanadium by weight, 1000 to 1600 ppm oxygen, less than 100 ppm carbon and between 5 and 35 ppm sulphur.

4. Application of an alloy according to one of Claims 1 to 3, **characterized in that** the component is a cladding tube and **in that** the alloy is in the recrystallized state.

5. Application of an alloy according to one of Claims 1 to 3, **characterized in that** the component is a flat product and **in that** the alloy is in the recrystallized state.

6. Application of an alloy according to one of Claims 1 to 5, **characterized in that** the said ratio is greater than 3.

7. Application of an alloy according to one of Claims 1 to 6, **characterized in that** the iron content does not exceed 0.35%.

8. Application of an alloy according to one of Claims 1 to 7, **characterized in that** precipitates of the βNb phase and the Zr (Nb,Fe,Cr,V)₂ intermetallic compound coexist within the alloy.
